# EUROPÄISCHE PATENTSCHRIFT

(11) **EP 3 441 127 B1**
(45) Veröffentlichungstag und Bekanntmachung des Hinweises auf die Patenterteilung: **12.02.2020**
(21) Anmeldenummer: 17400049.7
(22) Anmeldetag: 07.08.2017
(51) Int. Cl.: B01D 53/14, B01D 53/18, C10K 1/00, C10K 1/14

(54) **ABSORPTIONSKOLONNE MIT AUSSENLIEGENDEM WÄRMEAUSTAUSCHKREISLAUF**
ABSORPTION COLUMN EQUIPPED WITH EXTERNAL HEAT EXCHANGE CIRCUIT
COLONNE D'ABSORPTION DOTÉE DU CIRCUIT D'ÉCHANGE THERMIQUE EXTERNE

(43) Veröffentlichungstag der Anmeldung: 13.02.2019
(73) Patentinhaber: L'AIR LIQUIDE, SOCIÉTÉ ANONYME POUR L'ÉTUDE ET L'EXPLOITATION DES PROCÉDÉS GEORGES CLAUDE, 75007 Paris (FR)
(72) Erfinder: Schmidt, Sophia, 60486 Frankfurt am Main (DE); Rappold, Dorit, 60437 Frankfurt am Main (DE); Frey, Christian, 69181 Leimen (DE); Corbet, Sharon, 60438 Frankfurt am Main (DE); Gubrinski, Alfred, 64390 Erzhausen (DE)
(74) Vertreter: Dropsch, Holger

(56) Entgegenhaltungen:
- EP-A1- 3 132 840
- DE-A1-102015 101 415
- GB-A- 1 071 929
- US-A- 4 324 567
- US-A1- 2014 190 350

## Beschreibung

### Gebiet der Erfindung

Die Erfindung betrifft eine Absorptionskolonne, umfassend mindestens einen außenliegenden Wärmeaustauschkreislauf zur Kühlung oder Erwärmung der Absorptionsflüssigkeit, umfassen einen oder mehrere in Reihe geschaltete Wärmeaustauscher, wobei die Einbindung der Rohrleitung zur Entnahme der Absorptionsflüssigkeit aus der Kolonne oberhalb der Einbindung der Rohrleitung in den, in Fließrichtung, ersten Wärmeaustauschers des Kreislaufs liegt.

Zur Erfindung gehört auch die Verwendung einer erfindungsgemäßen Absorptionskolonne zum Betreiben einer Anlage zur Durchführung eines Absorptionsverfahrens zur Abtrennen von Begleitgasen aus Synthesegas,

### Stand der Technik

Derartige Absorptionskolonnen werden z.B. in nach dem Rectisol-Verfahren arbeitenden Anlagen verwendet, und auch in Anlagen des Purisol- und des Selexol-Verfahrens.

Das Purisol- und das Selexol-Verfahren werden in Ullmann's Encyclopedia of Industrial Chemistry, 6. Aufl. Bd. 15, S. 404 - 407 grundsätzlich beschrieben. Das Purisol-Verfahren verwendet das organische Absorptionsmittel N-Methylpyrrolidon (NMP) und wird bei Umgebungs- oder leicht darunter liegenden Temperaturen betrieben. Das Selexol-Verfahren verwendet Polyethylenglykoldimethylether als Absorptionsmittel.

Das Rectisol Verfahren wird in Ullmann's Encyclopedia of Industrial Chemistry, 6. Aufl. Bd. 15, S. 399 ff. grundsätzlich beschrieben. Dieses Verfahren dient, ebenso wie beispielsweise das Purisol-Verfahren, dazu, Rohsynthesegas, umfassend Kohlenmonoxid (CO) und Wasserstoff (H₂) bestehend und hergestellt z. B. durch partielle Oxidation von Schwerölen, Petrolkoks, Abfallstoffen oder durch Kohle- bzw. Ölrückstandsvergasung, von Begleitgasen zu reinigen. Das Rectisol-Verfahren verwendet als Absorptionsmittel tiefkaltes Methanol, wobei die Eigenschaft des Methanols ausgenutzt wird, dass seine Absorptionsfähigkeit für die Begleitstoffe mit abnehmender Temperatur stark zunimmt, während sie für CO und H₂ praktisch konstant bleibt. Bei den unerwünschten Begleitstoffen handelt es sich hauptsächlich um die Begleitgase Carbonylsulfid (COS), Schwefelwasserstoff (H₂S) und Kohlendioxid (CO₂).

Zur Durchführung dieser Absorptionsverfahren werden in vielen Fällen Kolonnen verwendet, in denen das darin aufsteigende, zu reinigende Gas im Gegenstrom mit der herabfließenden Absorptionsflüssigkeit in Kontakt gebracht wird. Die Absorptionsflüssigkeit wird dabei durch die bei der Absorption freigesetzten Wärme erwärmt, wodurch ihre Absorptionsfähigkeit sinkt.

Es gibt auch Anwendungsfälle, in denen ein Absenken der Absorptionsfähigkeit erwünscht ist und darum die Absorptionsflüssigkeit erwärmt wird. Die ist z. B. der Fall, wenn durch Strippen bereits absorbiertes Gas aus der Absorptionsflüssigkeit abgetrennt werden soll.

Zur Kühlung oder Erwärmung wird die Absorptionsflüssigkeit darum an geeigneter Stelle aus der Kolonne ausgeleitet, über einen Wärmeaustauscher geführt und wieder in die Kolonne eingeleitet. Dabei erfolgt der Transport der Flüssigkeit allein unter Ausnutzung des Höhenunterschieds zwischen der Entnahmestelle und der Wiedereinspeisungsstelle in die Kolonne, denn jeder Eintrag von mechanischer Energie, z. B. durch Pumpen, würde zu erhöhter Blasenbildung und damit zur teilweisen Ausgasung des bereits absorbierten Gases führen. Entsprechende Absorptionskolonnen aus dem Stand der Technik sind in den Dokumenten DE102015101415, EP3132840, US4324567, US2014190350 und GB1071929 offenbart.

Um einen möglichst guten Kontakt zwischen der Absorptionsflüssigkeit und der Wärmeaustauschfläche des Kühlers zu erhalten, wird der Kühler von der Absorptionsflüssigkeit von unten nach oben durchflossen. Dies führt aber dazu, dass die Zuführleitung zum Kühler einen tiefst gelegenen Umkehrpunkt, häufig auch Leitungssack genannt, durchlaufen muss. Im in Fließrichtung vor dem Tiefpunkt des Leitungssacks gelegenen, mit Gefälle verlegten Leitungsteil, kann es, insbesondere wenn die Absorptionsanlage mit Teillast betrieben wird, durch heftige Strömungsturbulenzen zu einer erhöhten Blasenentwicklung durch Ausgasung in der Absorptionsflüssigkeit kommen und, besonders wenn die Fallleitung nicht ganz gefüllt ist, kann durch die die Gefällstrecke herabstürzende Flüssigkeit Gas mitgerissen werden. Während größere Blasen entgegen der Strömungsrichtung der Flüssigkeit in der Leitung aufsteigen und in die Kolonne gelangen, werden kleinere Blasen von der Strömung durch den Leitungssack mitgerissen, gelangen in den Wärmeaustauscher und beeinträchtigen dort den Wärmeübergang.

Bisher wird diesem Problem dadurch begegnet, dass der Füllstand im mit Gefälle verlegten Teil der Zuführleitung mit einem in der Rückführleitung, zwischen dem Kühler und der Kolonne gelegenen Ventil geregelt wird. Damit soll erreicht werden, dass die Rohrleitung im Gefälleteil stets gefüllt ist und so die Turbulenzen gering gehalten werden. Nachteilig an dieser Lösung sind aber die hohen Investitions- und Instandhaltungskosten.

Die Aufgabe der Erfindung ist es daher, eine preiswertere, technisch einfache und zuverlässige Lösung zur Verfügung zu stellen.

### Beschreibung der Erfindung

Die Aufgabe wird durch eine Absorptionskolonne gemäß Anspruch 1 gelöst.

### Erfindungsgemäße Absorptionskolonne:

Absorptionskolonne, umfassend mindestens einem außenliegenden Wärmeaustauschkreislauf zur Kühlung oder Erwärmung der Absorptionsflüssigkeit, umfassen einen oder mehrere in Reihe geschaltete Wärmeaustauscher, wobei die Einbindung der Rohrleitung zur Entnahme der Absorptionsflüssigkeit aus der Kolonne oberhalb der Einbindung der Rohrleitung in den, in Fließrichtung, ersten Wärmetauscher liegt, dadurch gekennzeichnet, dass im Verlauf dieser Rohrleitung ein Schüttgutbett installiert ist.

Das Schüttgutbett verhindert, dass die Absorptionsflüssigkeit bei Teillastbetrieb wasserfallartig die Gefällstrecke der Zuführleitung zum Kühler hinunterschießt, wodurch es zu starker Blasenbildung und zum Mitreißen von Gas kommen würde. Das Schüttgutbett verlangsamt die Fließgeschwindigkeit und verringert damit den Eintrag an mechanischer Energie in die Absorptionsflüssigkeit und verringert damit die Blasenbildung. Dennoch gebildete Blasen bleiben auf der Oberfläche der Füllkörper hängen, schließen sich dort zu größeren Blasen zusammen, die entgegen der Flüssigkeitsströmung in der Kreislaufleitung aufsteigen und in die Kolonne gelangen. Durch diese Effekte wird die Menge an Blasen, die in den Wärmeaustauscher mitgerissenen werden, verringert. Auf diese Weise wird einer Verschlechterung des Wärmeaustauschs im Wärmeaustauscher entgegengewirkt.

### Bevorzugte Ausgestaltungen der Erfindung

Eine bevorzugte Ausgestaltung der Absorptionskolonne ist dadurch gekennzeichnet, dass das Schüttgutbett aus Füllkörpern besteht. Damit sind in erster Linie regellose Füllkörper gemeint, wie sie für den Stoffaustausch in Kolonnen eingesetzt werden. Diese Füllkörper sind in zahlreichen Ausführungen erhältlich, sodass aus einer großen Auswahl die passende Form, der passende Werkstoff und die passende Größe gefunden werden kann.

Eine weitere bevorzugte Ausgestaltung der Absorptionskolonne ist dadurch gekennzeichnet, dass die Rohrleitung zur Zufuhr der Absorptionsflüssigkeit in den oder die Wärmeaustauscher jeweils an dessen Unterseite und die zur Abfuhr an dessen Oberseite einbindet. Auf diese Weise durchströmt die Absorptionsflüssigkeit den bzw. die Wärmeaustauscher von unten nach oben, wodurch weniger Gasblasen in der Flüssigkeit vorhanden sind und den Kontakt zwischen der Flüssigkeit und der Wärmetauscherfläche weniger durch Blasen gestört ist.

Eine weitere bevorzugte Ausgestaltung der Absorptionskolonne ist dadurch gekennzeichnet, dass die Entnahme- und die Rückspeisestelle der Absorptionsflüssigkeit aus der Kolonne und das Schüttgutbett und der oder die Wärmetauscher bezüglich der Höhe so zu einander angeordnet sind, dass der Fluss der Absorptionsflüssigkeit durch den Wärmeaustauschkreislauf allein durch die Schwerkraft angetrieben wird. Durch den Verzicht auf Pumpen wird weniger mechanische Energie auf die Flüssigkeit übertragen, die ansonsten Blasenbildung begünstigen würde.

Eine weitere bevorzugte Ausgestaltung der Absorptionskolonne ist dadurch gekennzeichnet, dass die Wärmeaustauscher jeweils an einen Kältemittel-, Kalt- oder Kühlwasserkreislauf angeschlossen sind oder als Economiser mit einem verfahrensinternen Absorptionsmittelstrom verbunden sind. So kann im konkreten Einzelfall das kostengünstigste Wärmeträgermedium oder eine Kombination aus verschiedenen, indem mehrere Wärmeaustauscher hintereinander geschaltet werden, verwendet werden. Als Economiser wird ein Wärmeaustauscher bezeichnet, der zwei Prozessströme, in diesem Fall zwei Absorptionsmittelströme, miteinander in Wärmeaustausch bringt.

Zur Erfindung gehört auch die Verwendung einer erfindungsgemäßen Absorptionskolonne zum Betreiben einer Anlage zur Durchführung eines Verfahrens zur Abtrennen von Begleitgasen aus Synthesegas, wie z.B. dem Rectisol-, Purisol- oder Selexol-Verfahren.

Weiterhin gehört zur Erfindung die Verwendung einer erfindungsgemäßen Absorptionskolonne zum Betreiben eines Gasreinigungsverfahrens, dass als Absorptionsmittel Mischungen zwischen Methanol und N-Methylpyrrolidon, N-Methylpyrrolidon und einem aminhaltigen Absorptionsmittel (besonders Diethanolamin, Diisopropylamin, Diethylamin) oder Methanol und einem aminhaltigen Absorptionsmittel (besonders Diethanolamin, Diisopropylamin oder Diethylamin) verwendet.

### Ausführungsbeispiel

Weitere Merkmale, Vorteile und Anwendungsmöglichkeiten der Erfindung ergeben sich auch aus der nachfolgenden Beschreibung eines Ausführungsbeispiels und der Zeichnung. Dabei bilden alle beschriebenen und/oder bildlich dargestellten Merkmale für sich oder in beliebiger Kombination den Gegenstand der Erfindung, unabhängig von ihrer Zusammenfassung in den Ansprüchen oder deren Rückbeziehung.

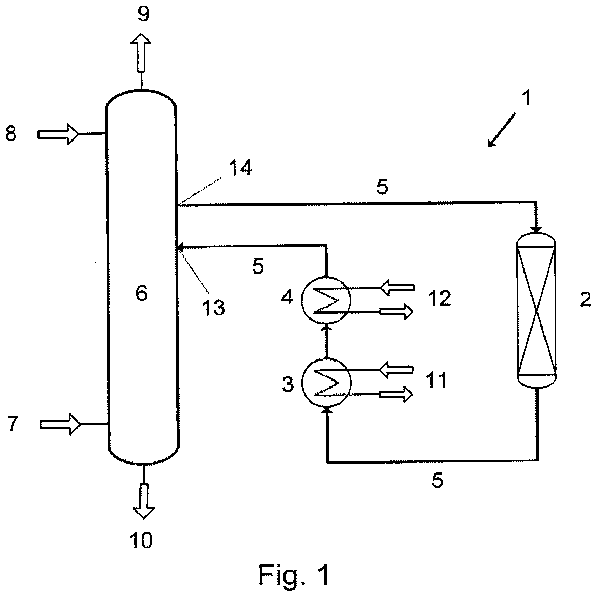

Die einzige Zeichnung, Fig. 1 zeigt beispielhaft eine erfindungsgemäße Absorptionskolonne mit außenliegendem Wärmeaustauschkreislauf.

Anhand der Zeichnung soll beispielhaft der Aufbau einer erfindungsgemäße Absorptionskolonne mit außenliegendem Wärmeaustauschkreislauf erläutert werden.

Der außenliegende Wärmeaustauschkreislauf 1 umfasst das Schüttgutbett 2, die Wärmeaustauscher 3 und 4 und die Kreislaufleitung 5. Weiterhin zeigt die Zeichnung eine Absorptionskolonne 6. In diese Kolonne 6 wird Synthesegas 7 von einem flüssigen Absorptionsmittel 8 gewaschen. Das so behandelte Synthesegas 9 und das beladene Absorptionsmittel 10 werden aus der Kolonne 6 zur jeweils weiteren, nicht dargestellten Behandlung ausgeleitet. Das Absorptionsmittel 8 wird, nachdem es im oberen Teil der Kolonne 6 beladen und die dabei entstandene Absorptionswärme erwärmt wurde, aus der Kolonne 6 ausgeleitet und durch die Kreislaufleitung 5 dem Schüttgutbett 2 zugeführt. Das Schüttgutbett 2 kann z. B. aus einer Schüttung aus Pall-Ringen, Raschig-Ringen oder Inertkörpern bestehen. Es hat die Aufgabe, Turbulenzen in der abwärts gerichteten Strömung zu dämpfen, um die Bildung von Gasblasen und das Mitreißen von Gas möglichst zu unterbinden. Anderenfalls würde das mitgerissene Gas bzw. die Gasblasen von der Strömung in die Wärmeaustauscher 3 und 4 mitgeführt und dort den Kontakt zwischen der Absorptionsflüssigkeit und der Wärmeaustauschfläche verschlechtern.

Die Absorptionsflüssigkeit durchströmt die Wärmeaustauscher 3 und 4, ebenfalls um Turbulenzen möglichst zu vermeiden, von unten nach oben. Der Wärmeaustauscher 3 wird in diesem Beispiel als Economiser eingesetzt und tauscht die Wärme des durch die Kreislaufleitung 5 strömenden Absorptionsmittels gegen die Wärme eines anderen, verfahrensinternen Absorptionsmittelstroms 11 aus. Der Wärmeaustauscher 4 arbeitet in diesem Beispiel als Kühler und wird mit einem in einer nicht dargestellten Kältemittelanlage gekühltem Kältemittel 12 betrieben.

Die Öffnung 13 zur Rückführung des Absorptionsmittels in die Kolonne 6 durch die Kreislaufleitung 5 bindet soweit unterhalb der Öffnung zur Entnahme 14 in die Kolonne 6 ein, dass der Transport der Absorptionsflüssigkeit durch den Wärmeaustauschkreislauf allein durch die Schwerkraft erfolgen kann.

### Gewerbliche Anwendbarkeit

Die Erfindung liefert eine kostengünstige Lösung zur Geringhaltung der Blasenbildung und damit der Aufrechterhaltung eines guten Wärmeaustauschs Wärmeaustauschkreislauf einer Absorptionskolonne. Damit ist die Erfindung gewerbsmäßig anwendbar.

### Bezugszeichenliste

- 1: Wärmeaustauschkreislauf
- 2: Schüttgutbett
- 3: Wärmeaustauscher (z. B. Economiser)
- 4: Wärmeaustauscher (z. B. Kühler)
- 5: Kreislaufleitung
- 6: Absorptionskolonne
- 7: Synthesegas
- 8: Absorptionsmittel
- 9: Synthesegas, behandelt
- 10: Beladenes Absorptionsmittel
- 11: Verfahrensinterner Absorptionsmittelstrom
- 12: Kältemittel
- 13: Öffnung zur Rückführung des Absorptionsmittels
- 14: Öffnung zur Entnahme des Absorptionsmittels

## Patentansprüche

1. Absorptionskolonne (6), umfassend mindestens einen außenliegenden Wärmeaustauschkreislauf (1) zur Kühlung oder Erwärmung der Absorptionsflüssigkeit, umfassend einen oder mehrere in Reihe geschaltete Wärmetauscher (3/4), wobei die Einbindung der Rohrleitung (5) zur Entnahme der Absorptionsflüssigkeit aus der Kolonne (6) oberhalb der Einbindung der Rohrleitung (5) in den, in Fließrichtung, ersten Wärmetauscher (3) liegt, **dadurch gekennzeichnet, dass** im Verlauf dieser Rohrleitung ein Schüttgutbett (2) installiert ist.

2. Absorptionskolonne gemäß. Anspruch 1, **dadurch gekennzeichnet, dass** das Schüttgutbett (2) aus Füllkörpern besteht.

3. Absorptionskolonne gemäß Anspruch 1 oder 2, **dadurch gekennzeichnet, dass** die Rohrleitung (5) zur Zufuhr der Absorptionsflüssigkeit in den mindestens einen Wärmeaustauscher (3) an dessen Unterseite und die Rohrleitung zur Abfuhr der Absorptionsflüssigkeit aus dem mindestens einen Wärmeaustauscher (3) an dessen Oberseite einbindet.

4. Absorptionskolonne gemäß einem der vorhergehenden Ansprüche, **dadurch gekennzeichnet, dass** die Entnahmestelle (14) und die Rückspeisestelle (13) der Absorptionsflüssigkeit aus der Kolonne (6) und das Schüttgutbett (2) und der mindestens eine Wärmetauscher (3/4) bezüglich der Höhe so zueinander angeordnet sind, dass der Fluss der Absorptionsflüssigkeit durch den Wärmeaustauschkreislauf (1) allein durch die Schwerkraft angetrieben wird.

5. Absorptionskolonne gemäß einem der vorhergehenden Ansprüche, **dadurch gekennzeichnet, dass** die Wärmeaustauscher (3/4) jeweils an einen Kältemittel-, Kalt- oder Kühlwasserkreislauf (12) angeschlossen sind oder als Economiser mit einem verfahrensinternen Absorptionsmittelstrom (11) verbunden sind.

6. Verwendung einer Absorptionskolonne gemäß einem der vorhergehenden Ansprüche in einer Gasreinigungsanlage zur Abscheidung acider Gaskomponenten, ins-AIR LIQUIDE-Aktenzeichen 2016P00207 besondere einer Anlage zum Betreiben des Rectisol-, des Purisol- oder des Selexol-Verfahrens.

7. Verwendung einer Absorptionskolonne gemäß einem der Ansprüche 1 bis 5 zum Betreiben eines Gasreinigungsverfahrens, das als Absorptionsmittel Mischungen zwischen Methanol und N-Methylpyrrolidon, N-Methylpyrrolidon und einem aminhaltigen Absorptionsmittel (besonders Diethanolamin, Diisopropylamin, Diethylamin) oder Methanol und einem aminhaltigen Absorptionsmittel (besonders Diethanolamin, Diisopropylamin, Diethylamin) verwendet.

## Claims

1. Absorption column (6), comprising at least one external heat exchange circuit (1) for cooling or heating the absorption liquid, comprising one or more serially connected heat exchangers (3/4), wherein the junction of the pipeline (5) for drawing off the absorption liquid from the column (6) is disposed above the junction of the pipeline (5) into the first heat exchanger (3) in the flow direction, **characterised in that** a dumped bed (2) is installed in the course of this pipeline.

2. Absorption column according to claim 1, **characterised in that** the dumped bed (2) consists of fillers.

3. Absorption column according to claim 1 or 2, **characterised in that** the pipeline (5) for feeding the absorption liquid into the at least one heat exchanger (3) joins the bottom side thereof and the pipeline for discharging the absorption liquid from the at least one heat exchanger (3) joins the top side thereof.

4. Absorption column according to any of the preceding claims, **characterised in that** the withdrawal point (14) and the return point (13) for the absorption liquid from the column (6) and the dumped bed (2) and the at least one heat exchanger (3/4) are arranged at such relative heights that the flow of the absorption liquid through the heat exchanger circuit (1) is driven solely by gravity.

5. Absorption column according to any of the preceding claims, **characterised in that** the heat exchangers (3/4) are each connected to a coolant, cold water or cooling water circuit (12) or are connected as economisers to an absorption medium stream (11) that is internal to the method.

6. Use of an absorption column according to any of the preceding claims in a gas purification plant for removal of acidic gas components, in particular a plant for operating the Rectisol, the Purisol or the Selexol method.

7. Use of an absorption column according to any of claims 1 to 5 for operating a gas purification method which uses as the absorption medium mixtures of methanol and N-methyl pyrrolidone, N-methyl pyrrolidone and an amine-containing absorption medium (in particular diethanolamine, diisopropylamine, diethylamine) or methanol and an amine-containing absorption medium (in particular diethanolamine, diisopropylamine, diethylamine).

## Revendications

1. Colonne d'absorption (6), comprenant au moins un circuit d'échange thermique (1) extérieur destiné à refroidir ou à chauffer le liquide d'absorption, comprenant un ou plusieurs échangeurs thermiques (3/4) branchés en série, dans laquelle le raccordement de la conduite (5) pour extraire le liquide d'absorption de la colonne (6) au-dessus du raccordement de la conduite (5), dans le sens d'écoulement, se trouve dans le premier échangeur thermique (3), **caractérisée en ce que** le long de cette conduite est installé un lit tassé (2).

2. Colonne d'absorption selon la revendication 1, **caractérisée en ce que** le lit tassé (2) se compose de matériaux de remplissage.

3. Colonne d'absorption selon la revendication 1 ou 2, **caractérisée en ce que** la conduite (5) se raccorde pour l'alimentation du liquide d'absorption dans l'au moins un échangeur thermique (3) à la face inférieure de celui-ci et la conduite se raccorde pour l'évacuation du liquide d'absorption de l'au moins un échangeur thermique (3) à la face supérieure de celui-ci.

4. Colonne d'absorption selon l'une quelconque des revendications précédentes, **caractérisée en ce que** le point de prélèvement (14) et le point de retour (13) du liquide d'absorption de la colonne (6) et le lit tassé (2) et l'au moins un échangeur thermique (3/4) concernant la hauteur sont disposés les uns par rapport aux autres de telle sorte que l'écoulement du liquide d'absorption par le circuit d'échange thermique (1) est actionné uniquement par la gravitation.

5. Colonne d'absorption selon l'une quelconque des revendications précédentes, **caractérisée en ce que** les échangeurs thermiques (3/4) sont raccordés respectivement à un circuit de refroidissement, frigorifique ou un circuit d'eau de refroidissement (12) ou sont reliés comme économiseur avec un courant central d'absorption interne au procédé (11).

6. Utilisation d'une colonne d'absorption selon l'une quelconque des revendications précédentes dans une installation de purification de gaz destinée à la séparation de composants gazeux acides, en particulier une installation pour mettre en œuvre le procédé Rectisol, Purisol ou Selexol.

7. Utilisation d'une colonne d'absorption selon l'une quelconque des revendications 1 à 5 pour la mise en œuvre d'un procédé de purification de gaz qui utilise comme agent d'absorption des mélanges entre méthanol et N-méthylpyrrolidone, N-méthylpyrrolidone et un agent d'absorption contenant une amine (en particulier diéthanolamine, diisopropylamine, diéthylamine) ou méthanol et un agent d'absorption contenant une amine (en particulier diéthanolamine, diisopropylamine, diéthylamine).
